(19) Europäisches Patentamt
European Patent Office
Office européen des brevets

(11) **EP 3 832 485 A1**

(12) **EUROPEAN PATENT APPLICATION**

(43) Date of publication:
**09.06.2021 Bulletin 2021/23**

(51) Int Cl.:
***G06F 16/332*** *(2019.01)*

(21) Application number: **19212844.5**

(22) Date of filing: **02.12.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
**KH MA MD TN**

(71) Applicant: **Koninklijke Philips N.V.**
**5656 AG Eindhoven (NL)**

(72) Inventors:
• **WEN, Dong**
**5656 AE Eindhoven (NL)**

• **ZHOU, Cloudy**
**5656 AE Eindhoven (NL)**
• **LI, Zuofeng**
**5656 AE Eindhoven (NL)**
• **CHOU, Hsu-Wen**
**5656 AE Eindhoven (NL)**
• **HU, Yiyi**
**5656 AE Eindhoven (NL)**

(74) Representative: **Philips Intellectual Property & Standards**
**High Tech Campus 5**
**5656 AE Eindhoven (NL)**

(54) **QUESTION ANSWERING SYSTEMS**

(57) The invention relates to intent classification of questions provided to a question answering, QA, system. A proposed method identifies negative emotion of the user, and, responsive to identifying negative emotion of the user, identifies an incorrect answer provided to the user. The incorrect answer and its associated question is analyzed to determine whether incorrect classification of the associated question's intent is responsible for the incorrect answer. Either an intent classification algorithm of the QA system or a QA algorithm selection process of the QA system is then modified accordingly.

**FIG. 1**

Printed by Jouve, 75001 PARIS (FR)

**Description**

FIELD OF THE INVENTION

The invention relates to the field of Question Answering (QA) systems, and in particular to intent classification of questions provided to a QA system.

BACKGROUND OF THE INVENTION

Question answering (QA) systems are adapted to provide answers to questions by analyzing a question and finding the answer in a database. The framework of question answering systems may therefore be regarded as similar to that of a search engine.

Typically, when a new question is provided to a QA system by a user, the questions if firstly analyzed and keywords are extracted to generate information retrieval conditions. To narrow down the complexity of information retrieval, an intent (i.e. reason, aim, motive, purpose or the like) of the question may be determined. Such determination of a question's intent can therefore affect the quality (e.g. relevance and/or accuracy) of a retrieved answer.

The classification of question intent in QA system requires a large quantity of annotated corpus. Further, the annotations (e.g. labelling) are generally constructed from manual annotation or open resource transformations. High-quality manual annotation of a large quantity of annotated corpus has the associated drawback that it is labour intensive and time consuming and time. Conversely, insufficient corpus and/or low quality labelling has the disadvantage that it will typically result in inaccurate intent classification.

Also, for most conventional QA systems, there is no mechanism to continuously improve performance. Conventional QA systems are therefore typically fixed at deployment and have little or no opportunity to improve.

Thus, there remains a need to develop improved (e.g. more accurate and self-learning) QA systems.

SUMMARY OF THE INVENTION

The invention is defined by the claims.

According to examples in accordance with an aspect of the invention, there is provided a method for intent classification of questions provided to a question answering, QA, system, the method comprising: analyzing one or more questions provided to the QA system by a user to identify negative emotion of the user; responsive to identifying negative emotion of the user, identifying an incorrect answer provided to the user; analyzing the incorrect answer and its associated question to determine whether incorrect classification of the associated question's intent is responsible for the incorrect answer; and modifying either an intent classification algorithm of the QA system or a QA algorithm selection process of the QA system based on the result of determining whether incorrect classification of the associated question's intent is responsible for the incorrect answer.

Proposed are concepts for automatically improving the intent classification of a QA system. Unlike conventional intent classification approaches, proposed embodiments may leverage emotion information conveyed by users as an indicator to augment training data. This may cater for an unsupervised approach that enables the intent classification process to keep learning continuously without human intervention.

The inventors propose that the identification and use of hidden information (in the form of emotion) in a user's input to a QA system may contribute to performance improvement. Thus, when analyzing question intent, proposed embodiments not only analyze the words of the question but also idenitfy and analyze emotion expressed by the user.

In particular, the inventors propose that the quality (e.g. accuracy or relevance) of an answer may be inferred from the response of a user. For example, a poor quality answer provided by a QA system may result in a negative response being provided by the user. In addition, some behavioural clues may be used to identify a dissatisfied user attitude. For instance, a user repeadtedly asking the same question may indicate that the user expects a better answer.

By way of example, proposed embodiments may be configured to use the emotional disposition of user's reply as hidden information indicative of answer quality. This has the benefit that it can leverage well-known and widely-avaiable emotion analysis algortihms and concepts, because emotion analysis is a well-studied field.

Also, embodiments need not be aimed at finding the emotional disposition behind all replies. To reduce over-intervention from inaccurate emotion indicator, only a few kinds of confirmed emotion pattern may be employed.

Proposed embodiments may be based on the idea that emotion of a user may provide hidden information that can be used to contribute to performance improvement for a QA system. User conversation records for a QA system can therefore be used as training data to improve the QA system with accumulation of various user styles. Put another way, users may express emotion when using a QA system, and the emotion maybe regarded as an indicator of answer quality. Embodiments therefore seek to improve the classification accuracy of question intent by leveraging emotion expressed by a user.

Further, it is proposed that, as users typically interact with QA systems in written text form, they may rarely express positive admiration to the program. But if the QA system performs poorly, the user may be anxious to express negative complaints. It is therefore anticipated that negative emotion in a conversation contains important information relating to system performance which may be leveraged to improve system performance. Thus, by way of example, proposed embodiments may comprise determining a wrong answer is response to detecting negative emotion based on an analysis of user's question(s).

QA systems are particularly useful in the healthcare domain. For instance, QA systems may be used as a part of a clinical decision process, and thus may be leveraged in Clinical Decision Support (CDS) systems. Proposed embodiment may therefore be of benefit in the medical domain, and particularly beneficial for CDS. For instance, proposed embodiments maybe employed in conjunction with a QA system of subject (e.g. patient) management application and/or other healthcare products so as to optimize the performance of user intent classification.

By way of further example, embodiments may be applicable to medical knowledge querying applications/systems. Concepts for improved (e.g. more accurate and/or dynamically improving) intent classification of questions provided to a closed-domain QA system may therefore be provided by embodiments.

In an embodiment, modifying either an intent classification algorithm of the QA system or a QA algorithm selection process of the QA system may comprise: responsive to determining that incorrect classification of the associated question's intent is responsible for the incorrect answer, modifying the intent classification algorithm used by the QA system for intent classification; and responsive to determining that incorrect classification of the associated question's intent is not responsible for the incorrect answer, modifying the QA algorithm selection process used by the QA system for question answering.

Put another way, embodiments may involve determining whether the wrong answer is caused by an employed answer engine or by incorrect classification of the question's intent. If the wrong answer is determined to be the best answer available, intent classification is determined to be responsible for the wrong answer and the intent classification algorithm may then be updated (e.g. by adjusting weighting values of the intent classification algorithm). Conversely, if the wrong answer is determined not to be the best answer, the answer engine is determined to be responsible for the wrong answer and the algorithm selection process used by the QA system may then be modified (e.g. being changing which answer generation algorithm is selected).

Also, modifying the intent classification algorithm used by the QA system for intent classification may comprise updating weights of parameters in the classifier of the intent classification algorithm that produced the incorrect intent classification. For example, updating weights of parameters in the classifier may comprise processing the weights with an iterative optimization algorithm. A cost function may be identified and then minimized using a conventional iterative algorithm for example. Embodiments may therefore employ convention or widely-known optimization algorithm to improve or optimize the intent classification algorithm. Accordingly, implementation of proposed embodiments may be simple and/or low cost by leveraging existing optimization concepts, and such concept s may be employed responsive to using negative emotion of the user to identify an incorrect answer provided to the user.

In an embodiment, modifying the QA algorithm selection process used by the QA system for question answering may comprise adjusting a selection of a QA algorithm based on the incorrect answer. For instance, where two QA algorithms may be employed by a QA system, a selection of one of the two QA algorithms may be changed. In this way, where the wrong QA algorithm was originally selected and used, an alternative QA algorithm may be selected in response to determining that incorrect classification of the associated question's intent is not responsible for the incorrect answer. Thus, not only may an intent classification algorithm of the QA system be improved upon by proposed embodiments, but embodiments may also improve a QA algorithm selection process in response to identifying negative emotion of the user.

In some embodiments, analyzing the incorrect answer and its associated question comprises: identifying alternative answers to the associated question; based on incorrect answer and the identified alternative answers, determining whether the best answer option was used as the incorrect answer; and determining if incorrect classification of the associated question's intent is responsible for the incorrect answer based on the result of determining whether the best answer option was used as the incorrect answer. Embodiments may therefore employ simple analysis concepts to determine which of the intent classification algorithm and the QA algorithm selection process may be responsible for the provision an incorrect answer.

Further, determining whether the best answer option was used as the incorrect answer may comprise: comparing the incorrect answer and the identified alternative answers with the associated question to identify which answer has the greatest similarity with the associated question; and determining the best answer option based on the identified answer having the greatest similarity with the associated question. Relatively simple analysis techniques may therefore be employed by proposed embodiments, thus reducing the cost and complexity of implementation.

In some embodiments, determining if incorrect classification of the associated question's intent is responsible for the incorrect answer may comprise, responsive to determining the best answer option was used as the incorrect answer, determining incorrect classification of the associated question's intent is responsible for the incorrect answer.

In this way, simple analysis techniques may be employed by proposed embodiments to determine a cause of an incorrect answer, thus reducing the cost and complexity of implementation.

The system may be remotely located from a QA system. In this way, a user (such as a medical professional) may have an appropriately arranged system for improving intent classification of questions provided to a QA system. Embodiments may therefore enable a user to dynamically improve a QA system using a local system (which may, for example, comprise a portable display device, such as a laptop, tablet computer, mobile phone, PDA, etc.). By way of example, embodiments may provide an application for a mobile computing device, and the application may be executed and/or controlled by a user of the mobile computing device.

The system may further comprise: a server device comprising the system for intent classification of questions; and a client device comprising a user-interface. Dedicated data processing means may therefore be employed for the purpose of improving intent classification, thus reducing processing requirements or capabilities of other components or devices of the system.

The system may further comprise a client device, wherein the client device comprises the all or part of a system according to an embodiment. In other words, a user (such as a doctor or medical professional) may have an appropriately arranged client device (such as a laptop, tablet computer, mobile phone, PDA, etc.).

It will be understood that processing capabilities may therefore be distributed throughout the system in different ways according to predetermined constraints and/or availability of processing resources.

According to examples in accordance with an aspect of the invention, there is provided a computer program product for intent classification of questions provided to a QA, system, the computer program product comprising a computer readable storage medium having program instructions embodied therewith, the program instructions executable by a processing unit to cause the processing unit to perform a method comprising: analysing one or more questions provided to the QA system by a user to identify negative emotion of the user; responsive to identifying negative emotion of the user, identifying an incorrect answer provided to the user; analyzing the incorrect answer and its associated question to determine whether incorrect classification of the associated question's intent is responsible for the incorrect answer; and modifying either an intent classification algorithm of the QA system or a QA algorithm selection process of the QA system based on the result of determining whether incorrect classification of the associated question's intent is responsible for the incorrect answer.

Accorsing to another aspect of the invention, there is provided a system for intent classification of questions provided to a question answering, QA, system, the system comprising: an analysis component configured to analyse one or more questions provided to the QA system by a user to identify negative emotion of the user; a classification component configured to, responsive to identifying negative emotion of the user, identify an incorrect answer provided to the user; a processing component configured to analyse the incorrect answer and its associated question to determine whether incorrect classification of the associated question's intent is responsible for the incorrect answer; and a modification component configure to modify an intent classification algorithm of the QA system or a question answering algorithm of the QA system based on the result of determining whether incorrect classification of the associated question's intent is responsible for the incorrect answer.

These and other aspects of the invention will be apparent from and elucidated with reference to the embodiment(s) described hereinafter.

BRIEF DESCRIPTION OF THE DRAWINGS

For a better understanding of the invention, and to show more clearly how it may be carried into effect, reference will now be made, by way of example only, to the accompanying drawings, in which:

Fig. 1 is a flow diagram of a method5 for unsupervised intent classification improvement for a QA system according to an embodiment;
Fig. 2 depicts exemplary architecture for optimizing intent classification algorithm according to an embodiment;
Fig. 3 shows a simplified block diagram of a system for intent classification of questions provided to a QA system according to an embodiment; and
Fig. 4 illustrates an example of a computer for implementing a controller or processor according to an embodiment.

DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

It is proposed that hidden information in user's interaction with a QA system may be identified and used to realize performance improvement. In particular, proposed embodiments present concepts for improving the performance of intent classification of questions by leveraging emotion expressed by user with unsupervised methods. In particular, negative emotional disposition in a user's interaction with a QA system may be identified as an indicator of dissatisfaction with an answer provided by the QA system. Then, the source of the mistaken answer may be determined by verifying answers from a multi-source information retrieval engine. If it is determined the mistaken answer resulted from incorrect question intent classification, the mistaken answer sample may then be assigned with dynamic weight according to mistake type and severity. Further, the intent classification model may be updated based on the determined mistake (e.g. using online learning). In this way, a QA system may keep improving automatically during interaction with users.

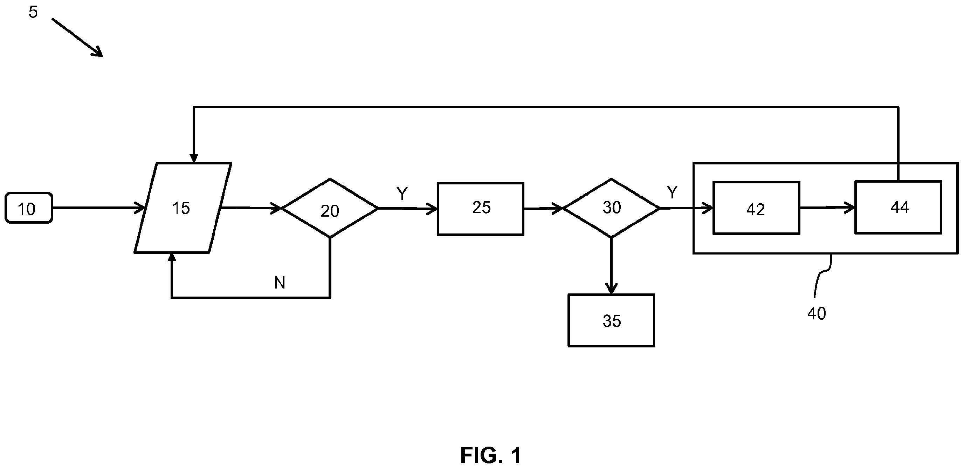

Referring now to Fig. 1, there is depicted a flow diagram of a proposed embodiment of a method 5 for unsupervised intent classification improvement for a QA system.

The method begins in step 10 and proceeds to step 15 of analyzing questions provided to the QA system by a user so as to identify negative emotion of the user. In step 20, it is determined whether or not negative emotion of the user has been identified. If no negative emotion of the user has been identified, the method returns to step 15 and continues to analyze further questions provided to the QA system. Conversely, responsive to identifying negative emotion of the user, the incorrect answer and its associated question are identified and the method proceeds to step 25.

Step 25 comprises analyzing the incorrect answer and its associated question to determine whether incorrect classification of the associated question's intent is responsible for the incorrect answer. Here such analysis comprises identifying alternative answers to the associated question, and, based on incorrect answer and the identified alternative answers, determining whether the best answer option was used as the incorrect answer.

For example, in this embodiment, determining whether the best answer option was used as the incorrect answer comprises the process of comparing the incorrect answer and the identified alternative answers with the associated question to identify which answer has the greatest similarity with the associated question. The best answer is the determined based on the identified answer having the greatest similarity with the associated question.

It is then determined whether incorrect classification of the associated question's intent is responsible for the incorrect answer, based on the result of determining whether the best answer option was used as the incorrect answer. In particular, in this example, embodiment, it is determined that incorrect classification of the associated question's intent is responsible for the incorrect answer if is determined that the best answer option was used as the incorrect answer.

After determining (in step 25) whether incorrect classification of the associated question's intent is responsible for the incorrect answer, the method proceeds to step 30. Step 30 is a decision step which determines the next step of method base on the result from step 25. Specifically, step 30 decides is the method modifies either an intent classification algorithm of the QA system or a QA algorithm selection process of the QA system based on the result of step 25 (of determining whether incorrect classification of the associated question's intent is responsible for the incorrect answer).

Responsive to step 30 identifying that incorrect classification of the associated question's intent is not responsible for the incorrect answer, the method proceeds to step 35 of modifying the QA algorithm selection process used by the QA system for question answering. In this example, step 35 of modifying the QA algorithm selection process used by the QA system for question answering comprises adjusting a selection of a QA algorithm based on the incorrect answer.

Conversely, responsive to step 30 identifying that incorrect classification of the associated question's intent is responsible for the incorrect answer, the method proceeds to step 40 of modifying the intent classification algorithm used by the QA system for intent classification. In this example embodiment, step 40 of modifying the intent classification algorithm used by the QA system for intent classification comprises: (step 42) updating weights of parameters in the classifier of the intent classification algorithm (using an iterative optimization algorithm); and (step 44) of updating the intent classification algorithm with online training.

From the description of the embodiment of Fig. 1 above, it will be appreciated that proposed embodiments may be summarized as comprising the following three main stages: (i) detection of negative emotional disposition in conversation; (ii) verification of answers from multi-source information retrieval engine; and (iii) updating of intent classifier with detected incorrect samples.

(i) Detection of negative emotional disposition in conversation

It is proposed that answer quality may be indicated from an emotion of response of a user, particularly negative emotion. Also, some behavioral clues may imply dissatisfaction with an answer, such as asking same question repeatedly. It is therefore proposed to detect the emotional disposition of a user's reply to an answer to obtain an indication of answer quality.

Emotion analysis is a deeply studied field, but embodiments need not be aimed at finding the emotional disposition behind all reply sentences. To reduce over-intervention from inaccurate emotion indicators, a set of confirmed emotion patters may be used to set label. Once strong negative emotion is detected, according Question-Answer pair can be recorded with wrong prediction label.

(ii) Verification of answers from multi-source information retrieval engine

When negative emotion is detected, this is taken to indicate that the answer provided in last turn was not satisfying (e.g. incorrect, inaccurate or irrelevant). Proposed embodiments are configured to clarify whether it is because the question's intent was not classified correctly or due to the answer generation algorithm.

For this reason, proposed embodiments verify answers from submodules of the information retrieval engine to judge whether the best answer option was provided. By way of example, a hybrid semantic relationship approach may be employed to compare answers to find the answer whose topic words shares most similarity with the question. It is proposed that if the verification shows the best answer option is the same as the answer in the conversation, the mistake is due to wrong question intent classification.

(iii) Updating the intent classification algorithm

Once the source of the mistake source has been determined, action can be taken to improve the system.

If the intent classification is indicated to be wrong, the incorrect intent classification is stored in database. Based on the occurrence time of wrong intent classification and the mistake type, dynamic weight is assigned to the detected sample. The weight is multiplied to a loss function when training the intent classification algorithm or model with online training. With dynamic loss, the intent classification algorithm or model can be adjusted in an appropriate scale according to the severity of the mistake.

Purely by way of further explanation, the process for modifying the intent classification algorithm or model may depend on the specifics of the algorithm/model. Many classification algorithms/models can be considered here, such as logistic regression, weighted naive Bayes, support vector machine and so on. However, by way of example, a framework for optimizing the classification algorithm/model can be summarized as follows.

- Denote the objective classifier algorithms as $h_\beta(x)=f(\beta_i{}^*x_i)$, where $\beta_i$ are weights for each feature dimension, and wherein f() is a function to represent the classifier.
- Denote the cost function as $J(\theta)$
- To minimize $J(\theta)$, employ an optimization algorithm like Gradient descent or quasisecant method to update weights iteratively.

For the optimization process, each sample with label will be fed to the cost function, and the result will be used to add a value to each $\beta_i$ to update weights. If the result is far from real label, the result of cost function will be large, therefore a large penalty value will be added to each $\beta_i$ with plus or minus according to the deviation direction. As a result, the objective function will be updated more and more accuracy by updating $\beta_i$.

To classify a new sample, the result of hp(x) is calculated with a function trained by previous training data. Once an intent is determined to be classified incorrectly, the sample and correct intent will be used to update all weights $\beta_i$.

The hp(x) is a continuous value between 0 and 1 representing that the likelihood of the sample belongs to the positive class. For example, for a binary classification question, it may provide a result of 0.75, which means it has confidence of 75% to determine the sample belongs to positive class and confidence of 25% for negative class, thus the sample is labeled positive. For multiclass classification question, each class is decoded with one-hot coding, and many classifiers are trained for each class to determine positive or negative.

By way of further explanation, additional detail regarding the various aspects of proposed embodiments is provided as follows:

A. Negative emotional disposition detection in text conversation

Emotion analysis is a mature field in natural language processing (NLP) which is often used to analyze public sentiment of social media. There are two main approaches for emotion analysis, one is based on emotion words dictionary and the other is based on machine learning with labelled data. Dictionary based approaches employ one or more emotion dictionaries and statistics to obtain the emotion probability of one sentence. Machine learning based approaches are essentially classification processes which may employ supervised and semi-supervised methods.

However, for proposed embodiments, it may not be sensible to determine the emotion of each sentence. Instead, it may be preferably for embodiments to detect user feedback with strong negative emotion (so as to potentially identify the wrong classification of question intent). The inventors investigations have identified that a set of typical negative emotion disposition patterns may include (but should not be limited to) the following patterns detailed in the following table (Table 1):

Table 1

| Name | Description | Example |
|---|---|---|
| Direct complaint | User says complaint or curse words to express dissatisfaction. | "You are wrong" "That's not right" |
| Repeated Questions | User asks same question or same meaning in different format repeatedly which may because of dissatisfying answer. | "What is tumor/ What is the definition of tumor/ tumor?" |
| Frequent personal idiom | For one user, there maybe some personal idioms spoken frequently. If the user said the idioms frequently in above conditions, when the user says the idioms next time, it may imply a dissatisfying answer. | -- Wrong answer! -- "You are stupid. Good for you!" -- Unsure answer --"Good for you!" |

For the condition of direct complaint, a set of such kinds of sentences and similar expressions can be accumulated from history records. In this way, direct complaints can be detected from the library with text searching.

For the condition of repeated questions, methods of paraphrase detection can be employed. Paraphrase means two sentences have the similar meaning but in a different expression way. This problem can be transformed into Encoder/Decoder problem which can be solved by Bi-directional Long Short-Term Memory Conditional Random Field (LSTM-CRF) model.

For the condition of frequent personal idiom, word and phrase frequency can be employed to find out the frequently spoken personal idiom. First, the condition of direct complaint and repeated questions need to be recognized and record the context. Then analyse the context with term frequency - inverse document frequency (TF-IDF) to rank phrase according to frequency and importance. Next, the high rank phrases are checked in condition of confirmed negative emotion. If a phrase appears frequently with occurrence of negative emotion, the phrase can be added to condition of frequent personal idiom. The threshold of frequency value may depend on the scenario and practice.

B. Single user conversation cell recognition

It is noted that a single conversation cell may be considered as a minimal sequential dialog held between a QA system and a user referring to the same object before a conclusion sentence is provided or a topic changes. For example, a user may ask a question and the QA system then replies with an answer. If the user then asks another topic, the single conversation cell is the last QA pair.

In the example of a multi-turn dialog, a user may ask a question without enough detailed information, the question is then completely asked with multi-turn interaction. The single conversation cell is then multiple sentences until another topic appears.

Bearing the above in mind, embodiments may be configured to determine which sentence the emotion indicator should be associated with. First, the intent classification algorithm will judge whether the question is a complete single question or a slot filling block. If it is a single question, the conversation cell is a single-turn dialog, and the last answer reply will be associated with the question. If the conversation cell is a multi-turn dialog, once the slot information is completely filled, the whole question will be associated with the answer.

C. Verification of best answer from multiple information retrieval engine.

As detailed in the exemplary embodiments above, to determine the responsible part for a wrong answer, it is proposed to determine whether the answer provided to the user is the best option the system could generate or not. As there may be many submodules to process a question with different intents, embodiments may be configured to compare all valid answers via hybrid semantic relationship.

For an information retrieval engine, some submodules may not be able to return a valid answer, like using a tumor knowledge question to ask weather querying module, nothing will be outputted. On the other hand, some questions may get different answers from different submodules. For example, given a tumor common sense question, a free-text-based knowledge base module and knowledge graph module in different domains/departments may reply with different answers. Ideally, the intent oriented submodule should generate the best answer. Embodiments thus compare the candidate answers to determine whether the provided answer is consistent with the best answer from all submodules.

An exemplary approach is to analyze all answers to find out the answer whose topic words shares most similarity with the question.

In such an approach, the first step is to extract the keywords in the question. The question sentence is segmented into single words. After filtering function words, the remaining notional words are regarded as key words. The second step is to extract topic words of each candidate answer. By way of example only, this may be employ Topical Word Embedding (TWE). With TWE, one can obtain a list of topic words for every answer paragraph. The third step is to compare the similarity of question keywords list and each answer topic words list. For each list, each word in the list is transformed into pre-trained word embedding, then a list vector can be got with bitwise accumulation. The best answer can then be recognized via calculating the cosine similarity between question keywords list vector and answer topic words list vector.

If the best answer is not the one provided to user, the data will be sent to a information retrieval engine(s). Otherwise, it is determined that the reason for the wrong answer is improper/incorrect intent classification.

D. Intent classification model update with dynamic weight loss.

If one considers the above-mentioned three types of negative emotion conditions (detailed in Table 1), the confidence to judge a wrong answer is not the same, so embodiments maybe configured to assign different weight to them respectively (e.g. 0.95, 0.85, 0.8) which need to be adjusted in practice.

Responsive to determining that incorrect intent classification is the source of a wrong answer, it may be stored in database and await expert review to confirm. Subsequently, when a new record comes, the database can be searched to judge whether the mistake occurs repeatedly. If the mistake appears more times, the weight of mistake sample may be increased. With this strategy, for mistakes with different scale of severity, training with dynamic weight is assigned to adjust the online training power.

By way of yet further explanation about the proposed concepts and their potential implementation, the potential need to accurately classify the intention of a sentence (e.g. question) having multiple meanings accurately using the emotion of user feedback will now be discussed further.

It is proposed that if a current question has context, one can use such context to classify question intent.

In order to determine question intent, the answer is firstly generated. It is proposed that, if the answer is correct, the emotion of a follow-up or feedback question will be generally positive, whereas, if the answer is incorrect, the emotion of a follow-up or feedback question will be generally negative. Accordingly, probability values for a follow-up or feedback question and the current question are firstly synthesized. Subsequently, user emotion detected for a follow-up or feedback question may be used to assess whether or not intent classification of the preceding question was correct (as has been discussed above). This may then be used to improve intention classification for the cation for the follow-up or feedback question. Such an approach may be referred to a feedback classification.

By way of further demonstrating proposed concepts, we now consider a known intention classification algorithm based on Naive Bayesian Classification. There are many known classification algorithms, but Bayesian is selected as an example here because it is easy to develop and exhibits good accuracy.

As is usual with conventional intent classification algorithms supervision is required, thus requiring the training data (i.e. corpus) to be labelled. Then, the intention classification algorithm is trained using the labelled corpus and semantic analysis by Naive Bayesian Classification. Experimental results indicated that the accuracy of such a conventional algorithm is 96.35% for sentences that only have a single meaning, but this then reduces to 9% for sentences having multiple meanings.

Proposed embodiments, however, may facilitate optimization of such an intent classification algorithm. In particular, because in some instances there is no context or the topic intention available to leverage, it is optimize an intent classification algorithm using the user feedback emotion. In summary, such an approach comprises: (i) synthesize the classifier's probability values of a current question and a subsequent follow-up question; and, (ii) employ user emotion associated with subsequent follow-up question to recalculate the follow-up question's intention and correct the current question's intention.

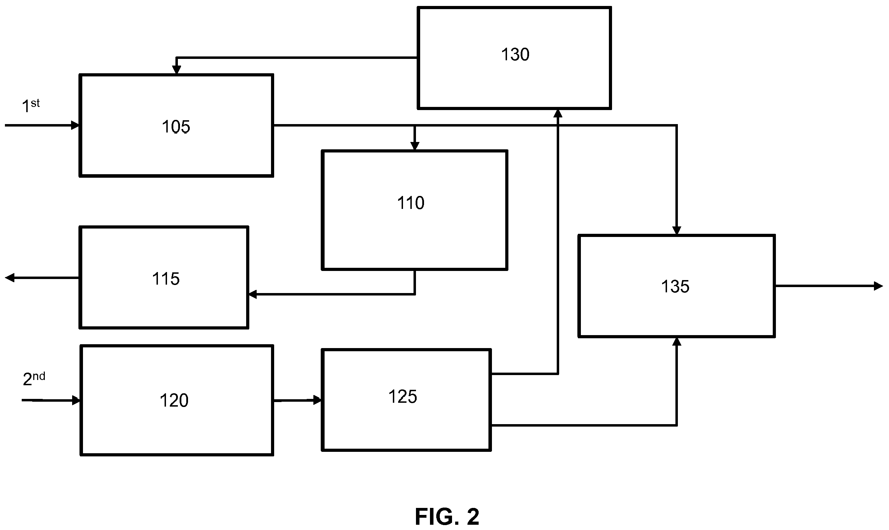

Exemplary architecture of such an embodiment for optimizing intent classification algorithm according to an embodiment is depicted in Fig. 2. A first question (labelled "1st") undergoes question intent analysis 105. The resulting question intent and topic of the first question is then provided to QA algorithm 110 which generates an answer 115 to the first question. A second question (labelled "2nd") undergoes naive Bayesian classification 120 and then an emotion associated with the second question is identified 125. The identified emotion is provided to a processing component 130 which to determines whether incorrect classification of the associated question's intent is responsible for an incorrect answer. Responsive to determining that incorrect classification of the associated question's intent is responsible for the incorrect answer, the processing component 130 modifies the question intent analysis 105. Also, the identified question intent and topic of the first question and the emotion associated with the second question (identified by process 125) are used in a further question intent analysis process 135 to determine question intent of the second question.

By way of further example, formulae for such a feedback-based approach may be as follows:

Corrected the intention of $Q_{i-1}$

$$\text{Score}(Q_{i-1})=\text{Max}\{\ P(Q_{i-1}/\ T)\ *E(Q_i),\ \alpha\ P(Q_i\ /\ \text{Un-T})\ *E(Q_i)\} \qquad (1\text{-}1)$$

$$E(Q_i)=\{-1,1\} \qquad (1\text{-}1\text{-}1)$$

{1: the emotion of $Q_i$ is positive;
-1 : the emotion of $Q_{i-1}$ is negative }

$$\text{Score}(Q_i)=\text{Max}\{\ \alpha\ P(Q_i/\ T) + \beta\ T(Q_{i-1},Q_i)\ *\ F(Q_{i-1},\text{Intension}),\alpha\ P(Q_i\ /\ \text{Un-T}) + \beta$$

$$T(Q_{i-1},Q_i)\ *\ F(Q_{i-1},\text{Intension})\ \} \qquad (1\text{-}2)$$

T, Un-T are two type of intention,
$\alpha +\beta =1$ , $\alpha$, $\beta$ is adjustment factor, $\alpha =0.6$, $\beta =0.4$

$$P(Q_i/\ T)\text{:the probability value about the intension of }Q_i\text{ is tumour} \qquad (1\text{-}2\text{-}1)$$

$P(Q_i\ /\ \text{Un-T})$:the probability value about the intension of $Q_i$ is un-tumour

$$T(Q_{i-1},Q_i)\ F(Q_{i-1},\text{ Intension})\ =\{-1,1\} \qquad (1\text{-}2\text{-}2)$$

{1: the topic of $Q_{i-1}$ is the same as $Q_i$ , or $Q_{i-1}$ is null;
-1 : the topic of $Q_{i-1}$ is the same as $Q_i$}

$$F(Q_{i-1},\text{ Intention})\ =\{-1,1\} \qquad (1\text{-}2\text{-}3)$$

{1: the intension of $Q_{i-1}$ is T or $Q_{i-1}$ is null;
-1 : the topic of $Q_{i-1}$ is not T}

A summary of the above feedback-based approach may be as follows:

First :When the user asks first questions, the system employs a Score (Qi) formulae (1-2) to calculate the intention score and fetch the max score label as a current question's intent (because there is no context in this scenario, so T(Qi-1,Qi) =1, F(Qi-1, Intention) =1 and the two feature is void, only deploy on the score if the Bayesian classifier (P(Qi/ T) and P(Qi / Un-T))).

Second: The QA system generates an answer based on the intent and then provides the answer to user.

Third: When user ask another question subsequent to receiving the provided answer, the system first analyzes the emotion of question and then employs formula score(Qi-1) to correct the last question's intent. It then employs formula Score(Qi) to calculate the current question's intent (because there is context in this scenario, T(Qi-1,Qi) employs topic analysis to fetch topic of each other, for F(Qi-1, Intention) using the last question's corrected intent and current intent based on score(Qi-1) (1-1)).

Forth: The QA system generates an answer based on the intent and responds to the user with the generated answer.

Fifth: Return to third step and repeat until dialogue with the user ends.

Experimental implementation of the proposed embodiments have indicated that an increase in the accuracy of around 5% is achieved when compared to a conventional QA system that does not employ emotion-based feedback concepts to dynamically modify an employed intent classification algorithm.

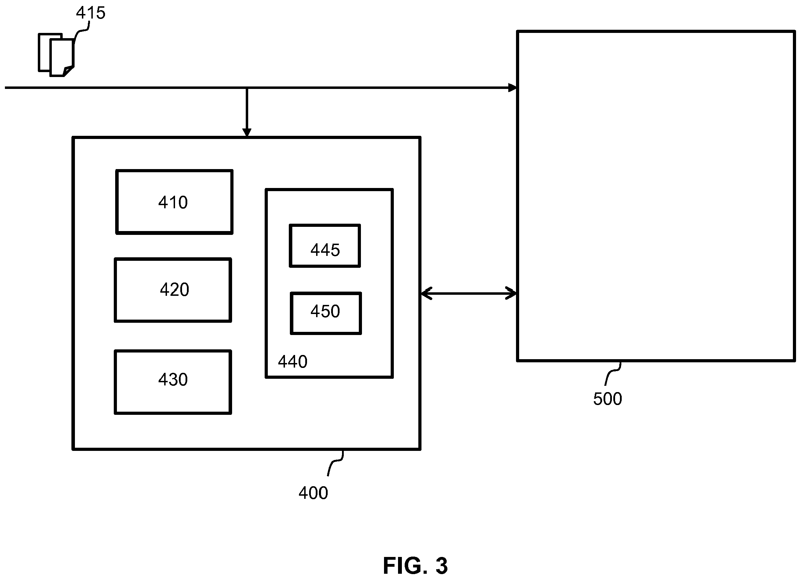

By way of yet further example, Fig. 3 shows a simplified block diagram of a system 400 for intent classification of questions provided to a QA system 500. The system comprises an analysis component 410 that is configured to analyze one or more questions 415 provided to the QA system 500 by a user so as to identify negative emotion of the user. Responsive to identifying negative emotion of the user, a classification component 420 of the system 400 is configured to identify an incorrect answer provided to the user. A processing component 430 of the system 400 then analyzes the incorrect answer and its associated question to determine whether incorrect classification of the associated question's intent is responsible for the incorrect answer. A modification component 440 of the system is configured to modify either: an intent classification algorithm of the QA system 500; or a QA algorithm of the QA system 500 based on the result of determining whether incorrect classification of the associated question's intent is responsible for the incorrect answer.

More specifically, the modification component 400 comprises an algorithm component 445 that is configured to, responsive to determining that incorrect classification of the associated question's intent is responsible for the incorrect answer, modify the intent classification algorithm used by the QA system 500 for intent classification. The modification component 400 also comprises a question component 450 that is configured to, responsive to determining that incorrect classification of the associated question's intent is not responsible for the incorrect answer, modify the question answering algorithm used by the QA system 500 for question answering.

The proposed system 400 of Fig. 3 is there configured to automatically improve the intent classification algorithm of the QA system 500. Unlike conventional intent classification approaches, the system 400 leverage emotion information conveyed by users as an indicator to augment training data. In particaur, the system 400 seeks to idenity negative emotion exhibited by a uaser in respone to receive an answer from the QA system 500. Such identification of negatuve emoition may be analysed so as to determine if it is caused by a incorrect answer resulting from either poor/incorrect classification of a question's intent or by an answer engine employed by the QA system 500. The determination result may then be used to update/modify the intent classification algorithm appropriately.

It will be appreciated from the descriprtion above that the proposed system may employ a controller or processor for processing data.

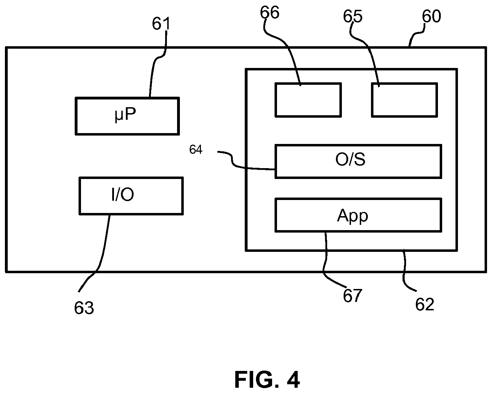

Fig. 4 illustrates an example of a computer 60 for implementing the controller or processor described above.

The computer 60 includes, but is not limited to, PCs, workstations, laptops, PDAs, palm devices, servers, storages, and the like. Generally, in terms of hardware architecture, the computer 60 may include one or more processors 61, memory 62, and one or more I/O devices 63 that are communicatively coupled via a local interface (not shown). The local interface can be, for example but not limited to, one or more buses or other wired or wireless connections, as is known in the art. The local interface may have additional elements, such as controllers, buffers (caches), drivers, repeaters, and receivers, to enable communications. Further, the local interface may include address, control, and/or data connections to enable appropriate communications among the aforementioned components.

The processor 61 is a hardware device for executing software that can be stored in the memory 62. The processor 61 can be virtually any custom made or commercially available processor, a central processing unit (CPU), a digital signal processor (DSP), or an auxiliary processor among several processors associated with the computer 60, and the processor 61 may be a semiconductor based microprocessor (in the form of a microchip) or a microprocessor.

The memory 62 can include any one or combination of volatile memory elements (e.g., random access memory (RAM), such as dynamic random access memory (DRAM), static random access memory (SRAM), etc.) and non-volatile memory elements (e.g., ROM, erasable programmable read only memory (EPROM), electronically erasable programmable read only memory (EEPROM), programmable read only memory (PROM), tape, compact disc read only memory (CD-ROM), disk, diskette, cartridge, cassette or the like, etc.). Moreover, the memory 62 may incorporate electronic, magnetic, optical, and/or other types of storage media. Note that the memory 62 can have a distributed architecture, where various components are situated remote from one another, but can be accessed by the processor 61.

The software in the memory 62 may include one or more separate programs, each of which comprises an ordered listing of executable instructions for implementing logical functions. The software in the memory 62 includes a suitable operating system (O/S) 64, compiler 65, source code 66, and one or more applications 67 in accordance with exemplary embodiments.

The application 67 comprises numerous functional components such as computational units, logic, functional units, processes, operations, virtual entities, and/or modules.

The operating system 64 controls the execution of computer programs, and provides scheduling, input-output control, file and data management, memory management, and communication control and related services.

Application 67 may be a source program, executable program (object code), script, or any other entity comprising a set of instructions to be performed. When a source program, then the program is usually translated via a compiler (such as the compiler 65), assembler, interpreter, or the like, which may or may not be included within the memory 62, so as to operate properly in connection with the operating system 64. Furthermore, the application 67 can be written as an object oriented programming language, which has classes of data and methods, or a procedure programming language, which has routines, subroutines, and/or functions, for example but not limited to, C, C++, C#, Pascal, BASIC, API calls, HTML, XHTML, XML, ASP scripts, JavaScript, FORTRAN, COBOL, Perl, Java, ADA, .NET, and the like.

The I/O devices 63 may include input devices such as, for example but not limited to, a mouse, keyboard, scanner, microphone, camera, etc. Furthermore, the I/O devices 63 may also include output devices, for example but not limited to a printer, display, etc. Finally, the I/O devices 63 may further include devices that communicate both inputs and outputs, for instance but not limited to, a network interface controller (NIC) or modulator/demodulator (for accessing remote devices, other files, devices, systems, or a network), a radio frequency (RF) or other transceiver, a telephonic interface, a bridge, a router, etc. The I/O devices 63 also include components for communicating over various networks, such as the Internet or intranet.

When the computer 60 is in operation, the processor 61 is configured to execute software stored within the memory 62, to communicate data to and from the memory 62, and to generally control operations of the computer 60 pursuant to the software. The application 67 and the operating system 64 are read, in whole or in part, by the processor 61, perhaps buffered within the processor 61, and then executed.

When the application 67 is implemented in software it should be noted that the application 67 can be stored on virtually any computer readable medium for use by or in connection with any computer related system or method. In the context of this document, a computer readable medium may be an electronic, magnetic, optical, or other physical device or means that can contain or store a computer program for use by or in connection with a computer related system or method.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measured cannot be used to advantage. Any reference signs in the claims should not be construed as limiting the scope.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measures cannot be used to advantage. If a computer program is discussed above, it may be stored/distributed on a suitable medium, such as an optical storage medium or a solid-state medium supplied together with or as part of other hardware, but may also be distributed in other forms, such as via the Internet or other wired or wireless telecommunication systems. If the term "adapted to" is used in the claims or description, it is noted the term "adapted to" is intended to be equivalent to the term "configured to". Any reference signs in the claims should not be construed as limiting the scope.

**Claims**

1. A method for intent classification of questions provided to a question answering, QA, system, the method comprising:

   - analyzing (15) one or more questions provided to the QA system by a user to identify negative emotion of the user;
   - responsive to identifying negative emotion of the user, identifying (25) an incorrect answer provided to the user;
   - analyzing (30) the incorrect answer and its associated question to determine whether incorrect classification of the associated question's intent is responsible for the incorrect answer; and
   - modifying (35, 40) either an intent classification algorithm of the QA system or a QA algorithm selection process of the QA system based on the result of determining whether incorrect classification of the associated question's intent is responsible for the incorrect answer.

2. The method of claim 1, wherein modifying either an intent classification algorithm of the QA system or a QA algorithm selection process of the QA system comprises:

   - responsive to determining that incorrect classification of the associated question's intent is responsible for the incorrect answer, modifying (40) the intent classification algorithm used by the QA system for intent classification; and
   - responsive to determining that incorrect classification of the associated question's intent is not responsible for the incorrect answer, modifying (35) the QA algorithm selection process used by the QA system for question answering.

3. The method of claim 2, wherein modifying the intent classification algorithm used by the QA system for intent classification comprises:
updating weights of parameters in the classifier of the intent classification algorithm that produced the incorrect intent classification.

4. The method of claim 3, wherein updating weights of parameters in the classifier comprises processing the weights with an iterative optimization algorithm.

5. The method of any of claims 2 to 4, wherein modifying the QA algorithm selection process used by the QA system for question answering comprises:
adjusting a selection of a QA algorithm based on the incorrect answer.

6. The method of any of claims 1 to 5, wherein analysing the incorrect answer and its associated question comprises:

- identifying alternative answers to the associated question;
based on incorrect answer and the identified alternative answers, determining whether the best answer option was used as the incorrect answer; and
- determining if incorrect classification of the associated question's intent is responsible for the incorrect answer based on the result of determining whether the best answer option was used as the incorrect answer.

7. The method of claim 6, wherein determining whether the best answer option was used as the incorrect answer comprises:

- comparing the incorrect answer and the identified alternative answers with the associated question to identify which answer has the greatest similarity with the associated question; and
- determining the best answer option based on the identified answer having the greatest similarity with the associated question.

8. The method of claim 6 or 7, wherein determining if incorrect classification of the associated question's intent is responsible for the incorrect answer comprises:
responsive to determining the best answer option was used as the incorrect answer, determining incorrect classification of the associated question's intent is responsible for the incorrect answer.

9. A computer program product for intent classification of questions provided to a question answering, QA, system, the computer program product comprising a computer readable storage medium having program instructions embodied therewith, the program instructions executable by a processing unit to cause the processing unit to perform a method comprising:

- analysing one or more questions provided to the QA system by a user to identify negative emotion of the user;
- responsive to identifying negative emotion of the user, identifying an incorrect answer provided to the user;
- analysing the incorrect answer and its associated question to determine whether incorrect classification of the associated question's intent is responsible for the incorrect answer; and
- modifying an intent classification algorithm of the QA system or a question answering algorithm of the QA system based on the result of determining whether incorrect classification of the associated question's intent is responsible for the incorrect answer.

10. A system (400) for intent classification of questions provided to a question answering, QA, system (500), the system comprising:

- an analysis component (410) configured to analyze one or more questions provided to the QA system by a user to identify negative emotion of the user;
- a classification component (420) configured to, responsive to identifying negative emotion of the user, identify an incorrect answer provided to the user;
- a processing component (430) configured to analyze the incorrect answer and its associated question to determine whether incorrect classification of the associated question's intent is responsible for the incorrect answer; and
- a modification component (440) configured to modify an intent classification algorithm of the QA system or a QA algorithm of the QA system based on the result of determining whether incorrect classification of the associated question's intent is responsible for the incorrect answer.

**11.** The system of claim 10, wherein the modification component comprises:

- an algorithm component (445) configured to, responsive to determining that incorrect classification of the associated question's intent is responsible for the incorrect answer, modify the intent classification algorithm used by the QA system for intent classification; and
- a question component (450) configured to, responsive to determining that incorrect classification of the associated question's intent is not responsible for the incorrect answer, modify the question answering algorithm used by the QA system for question answering.

**12.** The system of claim 11, wherein the modification component is configured to update weights of parameters in the classifier of the intent classification algorithm that produced the incorrect intent classification

**13.** The system of any of claims 10 to 12, wherein the processing component is configured to:

- identify alternative answers to the associated question;
- based on incorrect answer and the identified alternative answers, determine whether the best answer option was used as the incorrect answer; and
- determine if incorrect classification of the associated question's intent is responsible for the incorrect answer based on the result of determining whether the best answer option was used as the incorrect answer.

**14.** The system of claim 13, wherein the processing component is configured to:

- compare the incorrect answer and the identified alternative answers with the associated question to identify which answer has the greatest similarity with the associated question; and
- determine the best answer option based on the identified answer having the greatest similarity with the associated question.

FIG. 1

FIG. 2

FIG. 3

**FIG. 4**

Europäisches
Patentamt

European
Patent Office

Office européen
des brevets

## EUROPEAN SEARCH REPORT

Application Number

EP 19 21 2844

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/180196 A1 (TERRY GEORGE ALEXIS [US] ET AL) 13 June 2019 (2019-06-13) * abstract; figure 1 * * paragraph [0021] * * paragraph [0157]; figure 25A * * paragraph [0159]; figure 25D * ----- | 1-14 | INV. G06F16/332 |
| X | US 2019/260694 A1 (LONDHE NIKHIL [US] ET AL) 22 August 2019 (2019-08-22) * abstract; figure 1 * * paragraph [0036]; figure 2 * ----- | 1-14 | |

TECHNICAL FIELDS
SEARCHED    (IPC)

G06F

The present search report has been drawn up for all claims

| Place of search | Date of completion of the search | Examiner |
|---|---|---|
| Munich | 27 May 2020 | Deane, Inigo |

EPO FORM 1503 03.82 (P04C01)

## ANNEX TO THE EUROPEAN SEARCH REPORT
## ON EUROPEAN PATENT APPLICATION NO.

EP 19 21 2844

This annex lists the patent family members relating to the patent documents cited in the above-mentioned European search report.
The members are as contained in the European Patent Office EDP file on
The European Patent Office is in no way liable for these particulars which are merely given for the purpose of information.

27-05-2020

| Patent document cited in search report | | Publication date | Patent family member(s) | | Publication date |
|---|---|---|---|---|---|
| US 2019180196 | A1 | 13-06-2019 | NONE | | |
| US 2019260694 | A1 | 22-08-2019 | US | 2019260694 A1 | 22-08-2019 |
| | | | WO | 2019160791 A1 | 22-08-2019 |

EPO FORM P0459

For more details about this annex : see Official Journal of the European Patent Office, No. 12/82